(19) Europäisches Patentamt / European Patent Office / Office européen des brevets

(11) **EP 2 184 090 A1**

(12) **EUROPEAN PATENT APPLICATION**
published in accordance with Art. 153(4) EPC

(43) Date of publication:
**12.05.2010 Bulletin 2010/19**

(51) Int Cl.:
***A63F 13/12*** *(2006.01)*      ***A63F 13/10*** *(2006.01)*

(21) Application number: **08765448.9**

(22) Date of filing: **11.06.2008**

(86) International application number:
**PCT/JP2008/060669**

(87) International publication number:
**WO 2009/019933 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.08.2007 JP 2007207255**

(71) Applicant: **Konami Digital Entertainment Co., Ltd. Tokyo 107-8324 (JP)**

(72) Inventor: **TANAKA, Toshiyuki Tokyo 107-8324 (JP)**

(74) Representative: **Müller-Boré & Partner Patentanwälte Grafinger Strasse 2 81671 München (DE)**

(54) **NETWORK GAME SYSTEM, METHOD FOR CONTROLLING NETWORK GAME SYSTEM, PROGRAM, AND INFORMATION STORAGE MEDIUM**

(57)     To provide a network game system, which is provided with a chat function, and allows a user to enjoy playing a game in view of a tendency of each user toward use of the chat function. The present invention provides a network game, which is executed based on a combination of a plurality of users, and is provided with the chat function that enables chatting among the plurality of users. A chat function use tendency information storage unit (62) stores, in association with each user, use tendency information relating to the tendency toward the use of the chat function. A user combination determining unit (64) determines the combination of the plurality of users based on the use tendency information stored in the chat function use tendency information storage unit (62). A network game start instructing unit (66) gives an instruction to start executing the network game based on a result of determination made by the user combination determining unit (64).

FIG.6

## Description

TECHNICAL FIELD

The present invention relates to a network game system, a method for controlling a network game system, a program, and an information storage medium.

BACKGROUND ART

There is known a network game system that provides a network game executed based on a combination of a plurality of users. For example, there are known a network game system in which a plurality of users compete against each other in a game, and a network game system that provides a role-playing game in which a plurality of users form a group and attempt to complete the game. Further, in some cases, such a network game system is provided with a chat function that enables chatting among the plurality of users.
[Patent Document 1] JP 2003-260272 A

DISCLOSURE OF THE INVENTION

Problems to be solved by the Invention

In the network game system as described above, which is provided with the chat function, the user may not enjoy playing the game, for example, in a case where users having different tendencies toward use of the chat function are respective competition opponents, or in a case where users having different tendencies toward the use of the chat function belong to the same group.
For example, it is assumed that a first user, who wants to enjoy playing a game while enjoying chatting, and a second user, who wants to concentrate on playing a game without chatting, compete against each other in a game. In this case, the first user may feel unhappy with the second user not using the chat function. On the other hand, the second user may feel unhappy with the first user using the chat function.
Further, for example, it is assumed that a first user, who rarely uses the chat function when they are behind the competition opponent, and a second user, who uses the chat function even when they are behind the competition opponent, compete against each other in a game. In this case, when the second user is holding a lead over the competition opponent, the second user cannot enjoy chatting with the competition opponent (first user). As a result, the second user may feel unhappy.
The present invention has been made in view of the above-mentioned problems, and therefore has an object to provide a network game system, a method for controlling a network game system, a program, and an information storage medium, which allow the user to enjoy playing a game in view of the tendency of each user toward the use of the chat function in the network game system which is provided with the chat function.

Means for Solving the Problems

In order to solve the above-mentioned problems, a network game system according to the present invention is a network game system for providing a network game, which is executed based on a combination of a plurality of users, and is provided with a chat function that enables chatting among the plurality of users, including: storage means for storing, in association with each user, use tendency information relating to a tendency toward use of the chat function; determining means for determining the combination of the plurality of users based on the use tendency information stored in the storage means in association with each user; and instructing means for giving an instruction to start executing the network game based on the combination of the plurality of users, which is determined by the determining means.
Further, a method for controlling a network game system according to the present invention is a method for controlling a network game system for providing a network game, which is executed based on a combination of a plurality of users, and is provided with a chat function that enables chatting among the plurality of users, including: a step of reading a storage content of storage means for storing, in association with each user, use tendency information relating to a tendency toward use of the chat function; a determining step of determining the combination of the plurality of users based on the use tendency information stored in the storage means in association with each user; and an instructing step of giving an instruction to start executing the network game based on the combination of the plurality of users, which is determined by the determining step.
Further, a program according to the present invention is a program for causing a computer to function as a network game system for providing a network game, which is executed based on a combination of a plurality of users, and is provided with a chat function that enables chatting among the plurality of users. The program causes the computer to function as: means for reading a storage content of storage means for storing, in association with each user, use tendency information relating to a tendency toward use of the chat function; determining means for determining the combination of the plurality of users based on the use tendency information stored in the storage means in association with each user; and instructing means for giving an instruction to start executing the network game based on the combination of the plurality of users, which is determined by the determining means.
Further, an information storage medium according to the present invention is a computer-readable information storage medium recorded with the above-mentioned program. Further, a program distribution device according to the present invention is a program distribution device, which is provided with the information storage medium recorded with the above-mentioned program, and reads the above-mentioned program from the information storage medium to thereby distribute the program. Further, a program distribution method according to the present invention is a program distribution method including reading the above-mentioned program from the information storage medium recorded with the above-mentioned program, and then distributing the program.

The present invention relates to the network game system that provides the "network game, which is executed based on a combination of a plurality of users, and is provided with a chat function that enables chatting among the plurality of users". According to the present invention, the use tendency information relating to the tendency toward the use of the chat function is stored in the storage means in association with each user. Further, the combination of the plurality of users is determined based on the above-mentioned use tendency information stored in the storage means. Then, based on a result of the determination, the instruction to start executing the network game is given. According to the present invention, in the network game system provided with the chat function, it is possible to allow the user to enjoy playing the game in view of the tendency of the each user toward the use of the chat function.

Further, according to an aspect of the present invention, the network game system may further include: counting means for counting a number of times each user has used the chat function; and updating means for updating, based on the number of times a user has used the chat function, the use tendency information stored in the storage means in association with the user.

Further, according to another aspect of the present invention, the counting means may count the number of times each user has used the chat function during each of a plurality of periods. The updating means may update, based on the number of times a user has used the chat function during each of the plurality of periods, the use tendency information stored in the storage means in association with the user.

Further, according to still another aspect of the present invention, the counting means may include means for counting, for each user, the number of times the chat function has been used during game play and the number of times the chat function has been used before start of the game play or/and after end of the game play. The updating means may update, based on a result of a comparison between the number of times a user has used the chat function during the game play and the number of times the user has used the chat function before the start of the game play or/and after the end of the game play, the use tendency information stored in the storage means in association with the user.

Further, according to a further aspect of the present invention, the network game may be a competition game. The counting means may include means for counting, for each user, the number of times the chat function has been used during a period in which a match situation of the user is a first situation, and the number of times the chat function has been used during a period in which the match situation of the user is a second situation. The updating means may update, based on a result of a comparison between the number of times a user has used the chat function during the period in which the match situation of the user is the first situation, and the number of times the user has used the chat function during the period in which the match situation of the user is the second situation, the use tendency information stored in the storage means in association with each user.

It should be noted that, for example, the period in which the match situation of the user is the first situation represents a period in which the user is holding a lead over the competition opponent, whereas the period in which the match situation of the user is the second situation represents a period in which the user is behind the competition opponent. Further, for example, the period in which the match situation of the user is the first situation represents a period in which the user is holding a lead over the competition opponent, whereas the period in which the match situation of the user is the second situation represents a period in which the user is not holding a lead over the competition opponent. Further, for example, the period in which the match situation of the user is the first situation represents a period in which the user is not behind the competition opponent, whereas the period in which the match situation of the user is the second situation represents a period in which the user is behind the competition opponent. Here, the case in which "the user is holding a lead over the competition opponent" represents, for example, in a case of a competition game in which a win/loss is determined by making a comparison (in terms of values) between a given parameter of the user and a given parameter of the competition opponent, a case in which the given parameter of the user is larger or smaller than the given parameter of the competition opponent. More specifically, for example, in a competition game in which a competition is held with regard to how many points (given parameters) have been earned, such as a competition sports game or a competition mahjong game, the case in which "the user is holding a lead over the competition opponent" represents a case in which the score of the user is higher than the score of the competition opponent. Further, for example, in a competition game in which a competition is held with regard to finishing orders (given parameters), such as a competition racing game, the case in which "the user is holding a lead over the competition opponent" represents a case in which the finishing order of the user is higher than the finishing order of the competition opponent. Further, for example, in a competition game in which a competition is intended to reduce a "hit point" (given parameter) of respective competition opponents to zero, such as a competition fighting game, the case in which "the user is holding a lead over the competition opponent" represents a case in which the "hit point" of the user is higher than the "hit point" of the competition opponent. Further, for example, in a three-bout competition fighting game in which a person who has won two bouts first becomes the winner, the case in which "the user is holding a lead over the competition opponent" represents a case in which the number of wins of the user is more than the number of wins of the competition opponent. It should be noted that, for example, in the case of a competition game in which a competition is held with regard to how many points have been earned, such as the competition sports game or the competition mahjong game, the "match situation of the user" can be considered to be the scoring status of the user.

Further, according to a further aspect of the present invention, the network game system may further include: restriction means for imposing restriction on the use of the chat function; restriction lifting means for lifting the restriction imposed by the restriction means in the case where a given game event has occurred; and second counting means for counting a number of times the restriction imposed by the restriction means has been lifted for each of the plurality of periods. The updating means may update, based on the number of times a user has used the chat function during each of the plurality of periods, and the number of times the restriction imposed by the restriction means has been lifted during each of the plurality of periods, the use tendency information stored in the storage means in association with the user.

Further, according to a further aspect of the present invention, the network game system may further include: reproduction means for reproducing a replay video; reproduction canceling means for canceling the reproducing of the replay video in the case where a given operation is performed by the user; restriction means for imposing restriction on the use of the chat function; restriction lifting means for lifting the restriction imposed by the restriction means while the replay video is being reproduced; counting means for counting a number of times the reproducing of the replay video has been canceled with the given operation performed by each user; and updating means for updating, based on the number of times the reproducing of the replay video has been canceled with the given operation performed by a user, the use tendency information stored in the storage means in association with the user.

BRIEF DESCRIPTION OF THE DRAWINGS

FIG. 1 is a diagram illustrating an overall configuration of a network game system according to an embodiment of the present invention.
FIG. 2 is a diagram illustrating a hardware configuration of a network game management device.
FIG. 3 is a diagram illustrating a hardware configuration of a game device.
FIG. 4 is a diagram illustrating an example of a virtual three-dimensional space.
FIG. 5 is a diagram illustrating an example of a game screen at a time of message input.
FIG. 6 is a functional block diagram of the network game system according to the embodiment of the present invention.
FIG. 7 is a diagram illustrating an example of a data structure of user data.
FIG. 8 is a diagram for describing a chat function use tendency flag.
FIG. 9 is a diagram illustrating an example of a data structure of message input count data.
FIG. 10 is a flow chart illustrating processing for acquiring a message input count.
FIG. 11 is a flow chart illustrating processing for updating the user data.
FIG. 12 is a flow chart illustrating processing executed upon reception of a competition request.
FIG. 13 is a diagram illustrating another example of the data structure of the user data.

BEST MODE FOR CARRYING OUT THE INVENTION

Hereinbelow, an example of an embodiment of the present invention is described in detail with reference to the drawings.

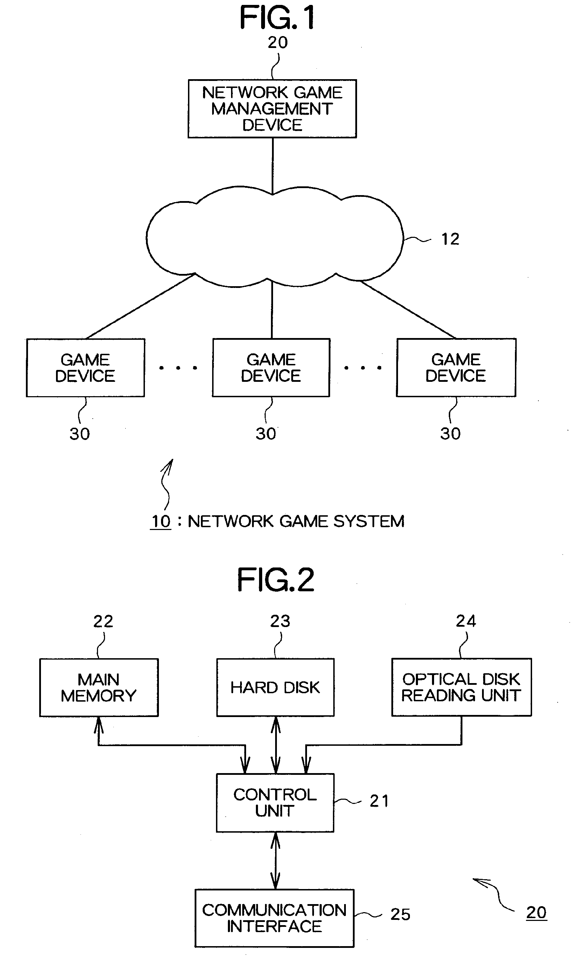

FIG. 1 is a diagram illustrating an overall configuration of a network game system according to the embodiment of the present invention. As illustrated in FIG. 1, a network game system 10 includes a network game management device 20 and a plurality of game devices 30. The network game management device 20 and the plurality of game devices 30 are connected to a communication network 12. Thus, the network game management device 20 and the game device 30 are capable of exchanging data with each other. Further, the game devices 30 are also capable of exchanging data with one another. It should be noted that the communication network 12 includes, for example, the Internet.

The network game management device 20 is implemented by a publicly known server computer system. FIG. 2 is a diagram illustrating a hardware configuration of the network game management device 20. As illustrated in FIG. 2, the network game management device 20 includes a control unit 21, a main memory 22, a hard disk 23, an optical disk reading unit 24, and a communication interface 25.

The control unit 21 is, for example, a microprocessor, and executes various kinds of information processing in accordance with an operating system or another program loaded into the main memory 22. The main memory 22 includes a RAM. A program and data which are read from the hard disk 23 or an optical disk (information storage medium) are stored in the main memory 22. The main memory 22 is also used as a work memory for storing a variety of pieces of data which are required during the course of the processing. The hard disk 23 includes a nonvolatile storage medium. The hard disk 23 stores a program and data. The optical disk reading unit 24 reads a program or data stored in the optical disk. The optical disk is, for example, a DVD-ROM or a CD-ROM. The communication interface 25 is an interface for connecting the network game management device 20 to the communication network 12.

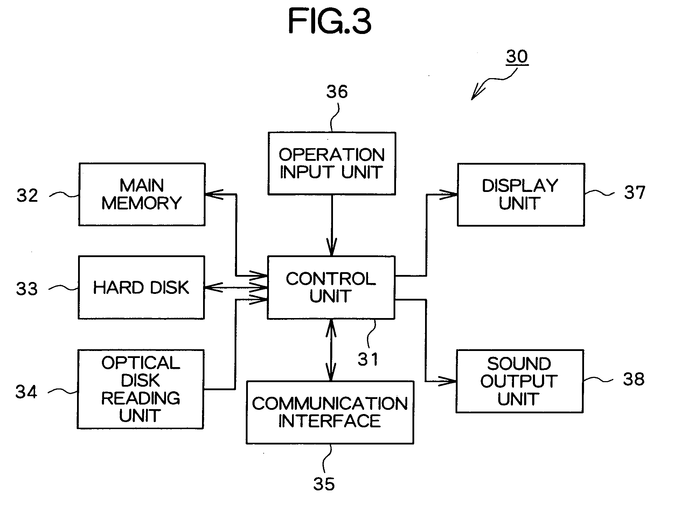

The game device 30 is implemented by, for example, a consumer game device, a portable game device, a mobile phone, a personal digital assistant (PDA), or a personal computer. The following description is given of a case where the game device 30 is implemented by a consumer game device. FIG. 3 is a diagram illustrating a hardware configuration of the game device 30. As illustrated in FIG. 3, the game device 30 includes a control unit 31, a main memory 32, a hard disk 33, an optical disk reading unit 34, a communication interface 35, an operation input unit 36, a display unit 37, and a sound output unit 38.

The control unit 31 is, for example, a microprocessor, and executes various kinds of information processing in accordance with an operating system or another program loaded into the main memory 32. The main memory 32 includes a RAM. A program and data which are read from the hard disk 33 or the optical disk are stored in the main memory 32. The main memory 32 is also used as a work memory for storing a variety of pieces of data which are required during the course of the processing. The hard disk 33 includes a nonvolatile storage medium. The hard disk 33 stores a program and data. The optical disk reading unit 34 reads a program or data stored in the optical disk. The optical disk is, for example, a DVD-ROM or a CD-ROM. The communication interface 35 is an interface for connecting the game device 30 to the communication network 12.

The operation input unit 36 is means for a user to input an operation. The operation input unit 36 is, for example, a game controller, a keyboard, or a mouse. The display unit 37 displays a game screen in accordance with an instruction given from the control unit 31. The display unit 37 is, for example, a home-use television set or a liquid crystal display. The sound output unit 38 outputs, in accordance with an instruction given from the control unit 31, various kinds of sound data such as game music, game sound effects, and messages, which are read from the hard disk 33 or the optical disk. The sound output unit 38 is, for example, a speaker or a headphone.

It should be noted that the game device 30 may be provided with such a sound input unit as a microphone. Further, a program may be provided to the network game management device 20 or the game device 30 by means of another information storage medium (memory card or the like) than the optical disk. Further, a program may be provided to the network game management device 20 or the game device 30 from a remote location via the communication network 12.

With the network game system 10 having the above-mentioned configuration, the user can enjoy playing a game with a user at a remote location via the communication network 12. For example, the user can enjoy playing a soccer game against a user at a remote location.

The user who desires to enjoy playing a soccer game against a user at a remote location first logs into the network game system 10. Next, the user transmits a competition request to the network game management device 20. In this case, the network game management device 20, which has received the competition request, automatically determines a competition opponent from among users who are in a login status and are not engaged in a competition.

For example, in the case where a second user is determined as a competition opponent against a first user, the network game management device 20 transmits, to the game device 30 of the first user, information (user ID, IP address, and the like) on the second user along with data giving an instruction to start a soccer game. Further, the network game management device 20 transmits, to the game device 30 of the second user, information on the first user along with the data giving an instruction to start a soccer game. Subsequently, the data is exchanged between the game device 30 of the first user and the game device 30 of the second user, whereby a soccer game is started.

In the game device 30 which has received the data giving an instruction to start a soccer game, a screen is displayed for the user to set the formation or the like for their own soccer team. Then, upon completion of the setting for the soccer team on each game device 30, a match (competition game play) is started.

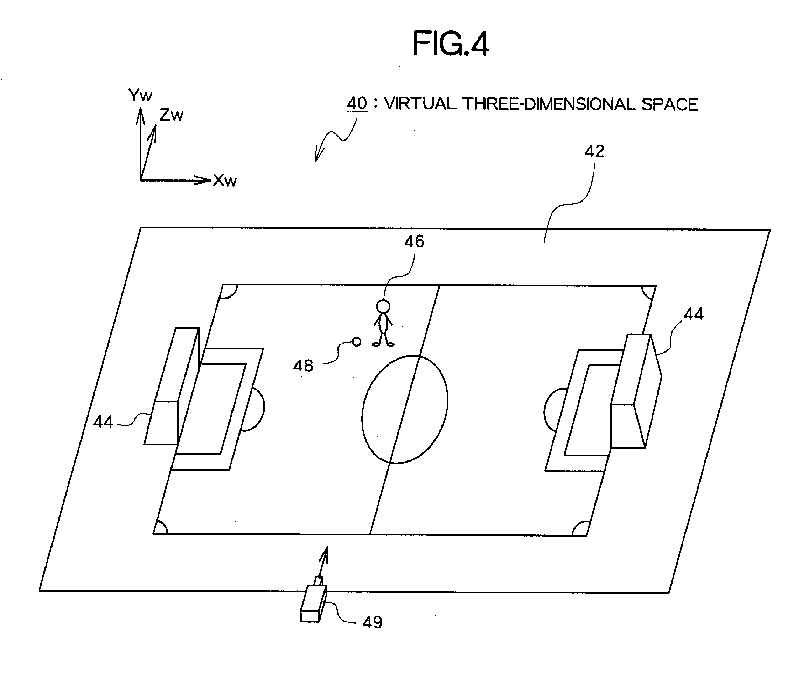

During the match (during competition game play), a common virtual three-dimensional space is built in the main memories 32 of the game devices 30 of the first user and the second user. FIG. 4 illustrates an example of the virtual three-dimensional space. As illustrated in FIG. 4, a field object 42 representing a soccer field is disposed in a virtual three-dimensional space 40. Goal objects 44 representing goals, a player character object 46 representing a soccer player, and a ball object 48 representing a soccer ball are disposed in the field object 42. It should be noted that, though omitted from FIG. 4, twenty-two player character objects 46 are disposed in the virtual three-dimensional space 40.

Further, a virtual camera 49 is disposed in the virtual three-dimensional space 40. A game screen showing the picture obtained by viewing the virtual three-dimensional space 40 from the virtual camera 49 is displayed on the display unit 37 of each game device 30. The user controls, while viewing the game screen, the player character object 46 of their own soccer team using the operation input unit 36.

In this embodiment, any one of the game devices 30 of the first user and the second user serves as a game server, and hence the virtual three-dimensional space 40 is shared between the game devices 30 of the first user and the second user. Here, a description is given of a case in which the game device 30 of the first user serves as the game server.

In the above-mentioned case, the main memory 32 of the game device 30 of the first user stores game situation data indicating a progress of match and the latest situation of the virtual three-dimensional space 40. The "progress of match" is, for example, a current score of each team (each user). The "latest situation of the virtual three-dimensional space 40" is, for example, the latest situation (position or posture) of the player character object 46, the ball object 48, and the virtual camera 49. On the other hand, the main memory 32 of the game device 30 of the second user stores a duplication of the game situation data stored in the game device 30 of the first user.

The game situation data stored in the game devices 30 of the first user and the second user is updated in the following manner. Specifically, the game device 30 of the second user provides notification about an operation content of the second user to the game device 30 of the first user. The game device 30 of the first user updates its own stored game situation data based on an operation content of the first user and the operation content of the second user. After that, the game device 30 of the first user transmits, to the game device 30 of the second user, game situation update data indicating the updated content of the game situation data. The game device 30 of the second user updates its own stored game situation data based on the game situation update data which has been transmitted from the game device 30 of the first user.

The display unit 37 of the game device 30 of the first user displays the game screen based on the game situation data stored in the game device 30 of the first user. On the other hand, the display unit 37 of the game device 30 of the second user displays the game screen based on the game situation data stored in the game device 30 of the second user.

In the above-mentioned manner, the game situation data (virtual three-dimensional space 40) is shared between the game devices 30 of the first user and the second user. Then, the display units 37 of the game devices 30 of the first user and the second user display the game screens showing the latest game situation.

Next, a description is given of a replay function, a reproduction canceling function, and a chat function, which are provided to the network game system 10.

The replay function is a function of reproducing a replay video. Each game device 30 records data (replay data) indicating situation changes of the virtual three-dimensional space 40 during the match. Then, in the case where a given game event has occurred, the control unit 31 (reproduction means) of each game device 30 reproduces a replay video based on the replay data. The "given game event" is, for example, scoring, shooting, foul, or offside. For example, if any one of the player character objects 46 has made a shot (if a shooting event has occurred), a replay video for the shooting scene is reproduced. It should be noted that a judgment as to whether or not the given game event has occurred may be made by the game device 30 serving as the game server. Then, in accordance with a result of the judgment, data giving an instruction to start reproduction of the replay video may be transmitted to the game device 30 of the competition opponent. Alternatively, the judgment as to whether or not the given game event has occurred may be made by each game device 30. Then, in accordance with a result of the judgment, each game device 30 may start to reproduce the replay video. Further, at the end of the match, a highlight video which is a collection of replay videos for key scenes of the match may be reproduced.

The reproduction canceling function is a function for canceling the reproduction of the replay video halfway. In this embodiment, in the case where the user performs a given operation during the reproduction of their own replay video, the control unit 31 (reproduction canceling means) of each game device 30 cancels the reproduction of the replay video. Accordingly, for example, in the case where the first user has scored, and the reproduction of the replay video for the scoring scene is started, the first user can terminate the reproduction of the replay video halfway by performing the given operation. It should be noted that, in this case, the second user cannot terminate the reproduction of this replay video halfway. Here, a judgment as to whether or not the user has performed the given operation during the reproduction of their own replay video may be made by the control unit 31 of each game device 30. Then, in accordance with a result of the judgment, data giving an instruction to cancel the reproduction of the replay video may be transmitted to the game device 30 of the competition opponent. Alternatively, the judgment as to whether or not the user has performed the given operation during the reproduction of their own replay video may be made by the game device 30 serving as the game server. Then, in accordance with a result of the judgment, the data giving an instruction to cancel the reproduction of the replay video may be transmitted to the game device 30 of the competition opponent. Otherwise, the reproduction of the replay video may be terminated halfway only when all the users have performed the given operation.

The chat function is a function which allows the user to enjoy chatting with the competition opponent. In the case of this embodiment, during a given period of time before the start of the match, the user can send a message to the competition opponent and also receive a message from the competition opponent. The "given period of time before the start of the match" is, for example, a period of time until each user finishes setting the soccer team. In addition, during a given period of time after the end of the match, the user can send a message to the competition opponent and also receive a message from the competition opponent. It should be noted that the "given period of time after the end of the match" is, for example, a period of time until a fixed time period has elapsed after the end of the match. Alternatively, the "given period of time after the end of the match" may be, for example, a period of time during which the highlight video is reproduced after the end of the match. When the "given period of time after the end of the match" has elapsed, the soccer game is ended, and then, match result data or the like is transmitted to the network game management device 20.

Further, in the case of this embodiment, the control unit 31 (restriction means) restricts the use of the chat function, in principle, during a period between the start of the match and the end of the match. However, in the case where the given game event has occurred, the control unit 31 (reproduction means and restriction lifting means) starts to reproduce the replay video, and lifts the restriction on the use of the chat function only while the replay video is reproduced. Accordingly, even during the period between the start of the match and the end of the match, as long as the replay video is being reproduced, the user can send a message to the competition opponent, and also receive a message from the competition opponent.

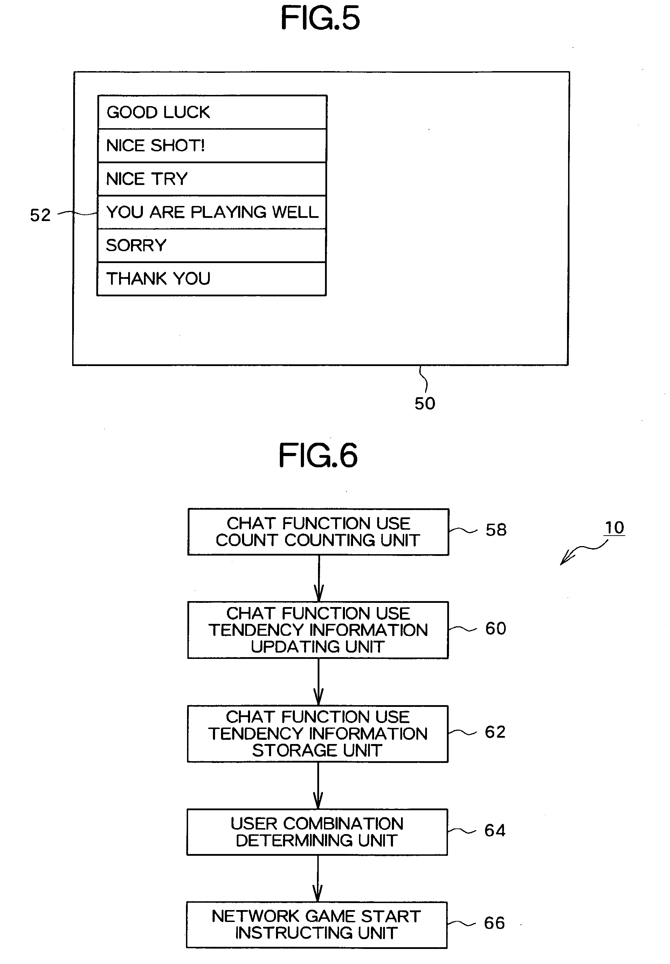

FIG. 5 illustrates an example of the game screen for the case in which the user sends a message to the competition opponent. It should be noted that the replay video or the like, for example, is displayed on the actual game screen, but is omitted from FIG. 5. When the user presses a given button within a period during which a message can be transmitted to the competition opponent, a message selection menu 52 as illustrated in FIG. 5 is displayed on a game screen 50. The message selection menu 52 is an image that prompts the user to select any one of a plurality of messages. The message selection menu 52 displays the plurality of messages which are registered in advance by the user. In the case when the user has selected any one of the plurality of messages displayed in the message selection menu 52, the message is transmitted to the game device 30 of the competition opponent. Then, the message is output and displayed on the display unit 37 (game screen) of the game device 30 of the competition opponent.

It should be noted that a message which is input by the user with a character input device (keyboard or the like) may be transmitted to the game device 30 of the competition opponent, and then may be output and displayed on the display unit 37 (game screen) of the game device 30 of the competition opponent. Alternatively, a sound message which is input by the user with a sound input device (microphone or the like) may be transmitted to the game device 30 of the competition opponent, and then may be output from the sound output unit 38 of the game device 30 of the competition opponent.

Incidentally, with the network game system 10 provided with the above-mentioned chat function, if users having different tendencies toward the use of the chat function are determined as respective competition opponents, the users may not enjoy playing the game.

For example, it is assumed that a first user, who wants to enjoy playing a game while enjoying chatting, and a second user, who wants to concentrate on playing a game without chatting, are determined as respective competition opponents. In this case, the first user may feel dissatisfied with not receiving a message from the second user. On the other hand, the second user may feel dissatisfied with receiving a message from the first user.

Moreover, for example, it is assumed that a first user, who rarely uses the chat function when they are behind the competition opponent (that is, when their own score is lower than the score of the competition opponent), and a second user, who uses the chat function even when they are behind the competition opponent, are determined as respective competition opponents. In this case, in a situation where the first user is behind the second user, the second user may not enjoy chatting with the competition opponent (first user). Thus, the second user may feel dissatisfied.

Hereinbelow, with regard to the network game system 10, a description is given of technology that is intended for the user to enjoy playing a game in view of the tendency of each user toward the use of the chat function.

FIG. 6 is a functional block diagram illustrating functions that are, among the functions implemented in the network game system 10, related to the present invention. As illustrated in FIG. 6, in terms of functionality, the network game system 10 includes a chat function use count counting unit 58, a chat function use tendency information updating unit 60, a chat function use tendency information storage unit 62, a user combination determining unit 64, and a network game start instructing unit 66. For example, the chat function use count counting unit 58 is implemented by each game device 30, whereas the other functional blocks are implemented by the network game management device 20. Those functional blocks are implemented by the network game management device 20 or the game device 30 executing the programs.

[Chat function use tendency information storage unit]

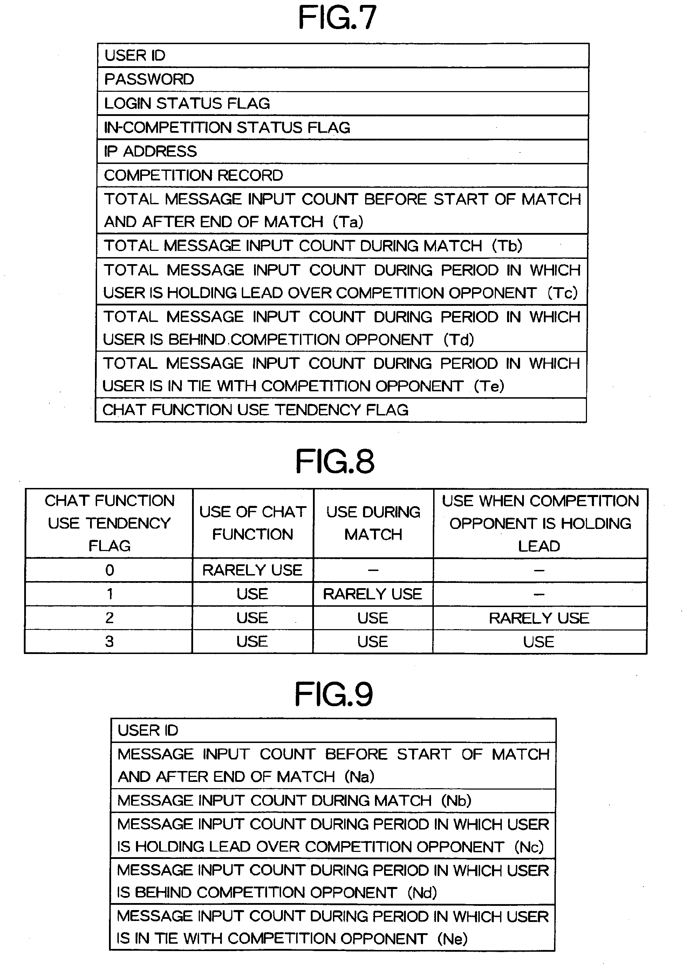

The chat function use tendency information storage unit 62 is implemented by, for example, the hard disk 23 of the network game management device 20. The chat function use tendency information storage unit 62 stores, in association with each of a plurality of users, use tendency information regarding the tendency toward the use of the chat function. In the case of this embodiment, the chat function use tendency information storage unit 62 stores user data for each of the plurality of users. FIG. 7 illustrates an example of a data structure of the user data.

The user data illustrated in FIG. 7 contains a "user ID", a "password", a "login status flag", an "in-competition status flag", an "IP address", a "competition record", a "total message input count before the start of the match and after the end of the match (Ta) ", a "total message input count during the match (Tb) ", a "total message input count during a period in which the user is holding a lead over the competition opponent (Tc)", a "total message input count during a period in which the user is behind the competition opponent (Td)", a "total message input count during a period in which the user is in a tie with the competition opponent (Te)", and a "chat function use tendency flag".

The "user ID" is information for uniquely identifying the user. The "user ID" and the "password" are referred to when the network game management device 20 judges whether or not the user can log into the network game system 10. The "login status flag" is information indicating whether or not the user is in a login status with respect to the network game system 10. The "in-competition status flag" is information indicating whether or not the user is engaged in a competition against another user. The "IP address" indicates the IP address of the game device 30 of the user. The "competition record" indicates a competition record of the user. The "competition record" indicates the number of competitions, the number of wins, the number of losses, and the number of ties. The "competition record" is information indicating, for example, "60 competitions with 30 wins, 20 losses, and 10 ties".

The "total message input count before the start of the match and after the end of the match (Ta)" indicates the total number of times the user has input a message before the start of the match and after the end of the match in the past competitions. The "total message input count during the match (Tb) " indicates the total number of times the user has input a message during the match in the past competitions. The "total message input count during a period in which the user is holding a lead over the competition opponent (Tc) " indicates the total number of times the user has input a message during a period in which the score of the user is higher than the score of the competition opponent in the past competitions. The "total message input count during a period in which the user is behind the competition opponent (Td)" indicates the total number of times the user has input a message during a period in which the score of the user is lower than the score of the competition opponent in the past competitions. The "total message input count during a period in which the user is in a tie with the competition opponent (Te) " indicates the total number of times the user has input a message during a period in which the score of the user is the same as the score of the competition opponent in the past competitions.

The "chat function use tendency flag" is information indicating the tendency toward the use of the chat function. In the case of this embodiment, the "chat function use tendency flag" takes values ranging from 0 to 3. FIG. 8 is a diagram for describing the "chat function use tendency flag". As illustrated in FIG. 8, the value "0" indicates that the user has a tendency to rarely use the chat function, whereas the values "1" to "3" indicate that the user has a tendency to use the chat function.

Further, the value "1" indicates that the user has a tendency not to use the chat function during the match. In other words, the value "1" indicates that the user has a tendency to use the chat function only before the start of the match or after the end of the match. The values "2" and "3" indicate that the user has a tendency to use the chat function during the match.

Further, the value "2" indicates that the user has a tendency to rarely use the chat function when they are behind the competition opponent. In other words, the value "2" indicates that the user has a tendency to use the chat function only when they are not behind the competition opponent. The value "3" indicates that the user has a tendency to use the chat function even when they are behind the competition opponent.

[Chat function use count counting unit]

The chat function use count counting unit 58 is mainly implemented by, for example, the control unit 31 and the main memory 32 of each game device 30. The chat function use count counting unit 58 counts the number of times the user has used the chat function. For example, the chat function use count counting unit 58 counts the number of times the user has input a message for each of a plurality of periods. For example, the chat function use count counting unit 58 counts the number of times the user has input a message during the game play, and the number of times the user has input a message before the start of the game play or/and after the end of the game play. Further, for example, the chat function use count counting unit 58 counts the number of times the user has input a message during a period in which the match situation of the user is a first situation, and the number of times the user has input a message during a period in which the match situation of the user is a second situation. For example, the chat function use count counting unit 58 counts the number of times the user has input a message during a period in which the scoring status of the user is in the first situation, and the number of times the user has input a message during a period in which the scoring status of the user is in the second situation.

In the case of this embodiment, the chat function use count counting unit 58 counts the number of times the user has input a message before the start of the match and after the end of the match, and the number of times the user has input a message during the match. Further, the chat function use count counting unit 58 counts the number of times the user has input a message during a period in which the user is holding a lead over the competition opponent, the number of times the user has input a message during a period in which the user is behind the competition opponent, and the number of times the user has input a message during a period in which the user is in a tie with the competition opponent. Hereinbelow, a description is given of data stored in the main memory 32 of each game device 30 and processing executed by each game device 30, which are used for implementing the chat function use count counting unit 58.

FIG. 9 illustrates an example of a data structure of message input count data which is stored in the main memory 32 of each game device 30. The message input count data illustrated in FIG. 9 contains the "user ID", a "message input count before the start of the match and after the end of the match (Na) ", a "message input count during the match (Nb)", a "message input count during a period in which the user is holding a lead over the competition opponent (Nc)", a "message input count during a period in which the user is behind the competition opponent (Nd) ", and a "message input count during a period in which the user is in a tie with the competition opponent (Ne)". It should be noted that the message input counts Na to Ne are initialized to 0 when each game device 30 receives the data giving an instruction to start a soccer game from the network game management device 20.

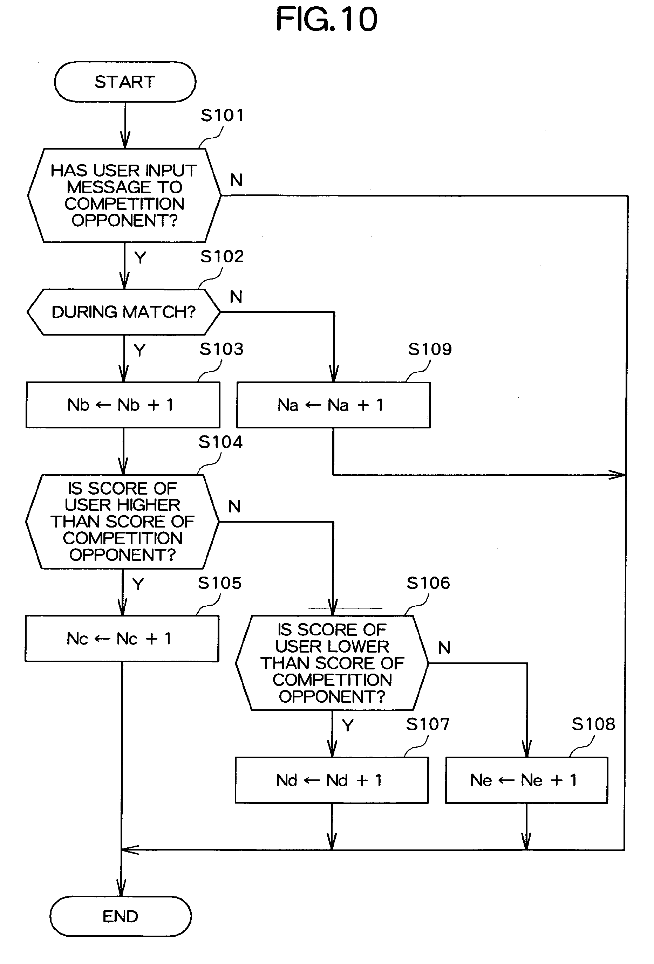

FIG. 10 is a flow chart illustrating the processing executed by each game device 30. The processing illustrated in FIG. 10 is executed at given intervals (for example, 1/60th of a second) during each of the periods of before the start of the match, during the match, and after the end of the match. The control unit 31 of the game device 30 executes the processing illustrated in FIG. 10 in accordance with the program stored in the hard disk 33 or the optical disk.

As illustrated in FIG. 10, the control unit 31 first judges whether or not the user has input a message to the competition opponent (S101). Specifically, the control unit 31 judges whether or not the user has selected any one of the plurality of messages displayed in the message selection menu 52. When it is judged that the user has not input a message, this processing is ended.

When it is judged that the user has input a message, the control unit 31 judges whether or not a match is currently in progress (S102). When it is judged that a match is not currently in progress, that is, when it is currently before the start of the match or after the end of the match, the control unit 31 adds 1 to the value of the message input count Na (S109).

On the other hand, when it is judged that a match is currently in progress, the control unit 31 adds 1 to the value of the message input count Nb (S103). Then, the control unit 31 judges whether or not the score of the user is higher than the score of the competition opponent (S104). When it is judged that the score of the user is higher than the score of the competition opponent, 1 is added to the value of the message input count Nc (S105).

On the other hand, when it is judged that the score of the user is not higher than the score of the competition opponent, the control unit 31 judges whether or not the score of the user is lower than the score of the competition opponent (S106). When it is judged that the score of the user is lower than the score of the competition opponent, the control unit 31 adds 1 to the value of the message input count Nd (S107). Further, when it is judged that the score of the user is not lower than the score of the competition opponent, that is, when the score of the user is the same as the score of the competition opponent, the control unit 31 adds 1 to the value of the message input count Ne (S108).

With this, the processing illustrated in FIG. 10 is completed. Here, when a given period of time (chat-allowed period) after the end of the match is ended, first, the game device 30 of the second user (game device 30 that does not serve as the game server) transmits its own stored message input count data (message input count data of the second user) to the game device 30 of the first user (game device 30 that serves as the game server). Then, the game device 30 of the first user transmits, to the network game management device 20, the match result data, its own stored message input count data (message input count data of the first user), and the message input count data (message input count data of the second user) received from the game device 30 of the second user.

[Chat function use tendency information updating unit]

The chat function use tendency information updating unit 60 is mainly implemented by, for example, the control unit 21 of the network game management device 20. The chat function use tendency information updating unit 60 updates use tendency information of each user, which is stored in the chat function use tendency information storage unit 62, based on the number of times the user has used the chat function. In the case of this embodiment, the chat function use tendency information updating unit 60 updates the user data stored in the chat function use tendency information storage unit 62 based on a result of counting by the chat function use count counting unit 58.

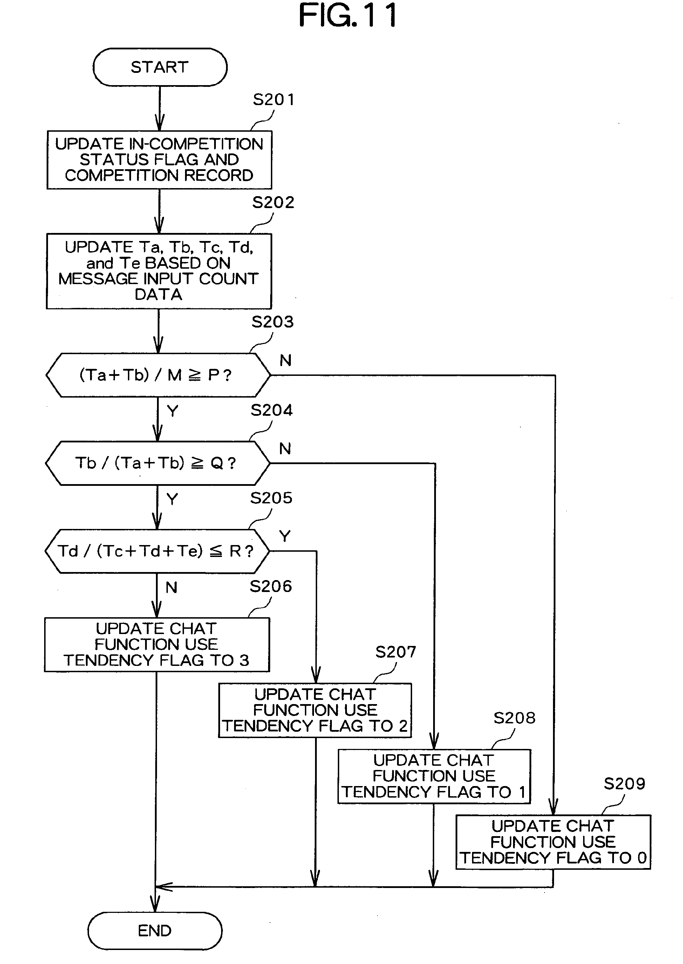

A description is given of processing which is executed by the network game management device 20 in order to implement the chat function use tendency information updating unit 60. FIG. 11 is a flow chart illustrating the processing executed by the network game management device 20 which has received the match result data and the message input count data. The processing illustrated in FIG. 11 is executed for each user. For example, after a competition between the first user and the second user is ended, the processing illustrated in FIG. 11 is executed based on the match result data and the message input count data of the first user, whereby the user data of the first user is updated. In addition, the processing illustrated in FIG. 11 is executed based on the match result data and the message input count data of the second user, whereby the user data of the second user is updated. Incidentally, the control unit 21 of the network game management device 20 executes the processing illustrated in FIG. 11 in accordance with the program stored in the hard disk 23 or the optical disk.

As illustrated in FIG. 11, the control unit 21 first updates the "in-competition status flag" and the "competition record" (S201). The "competition record" is updated based on the match result data. After that, the control unit 21 updates the total message input counts Ta to Te based on the message input count data (S202). Specifically, the control unit 21 adds the value of the message input count Na to the value of the total message input count Ta. The control unit 21 adds the value of the message input count Nb to the value of the total message input count Tb. The control unit 21 adds the value of the message input count Nc to the value of the total message input count Tc. The control unit 21 adds the value of the message input count Nd to the value of the total message input count Td. The control unit 21 adds the value of the message input count Ne to the value of the total message input count Te.

Next, the control unit 21 judges whether or not (Ta+Tb) /M is equal to or more than a given reference count P (S203). M represents the number of competitions which the user has had thus far. As a result, (Ta+Tb) /M indicates a message input count (chat count) per competition. Accordingly, in S203, it is judged whether or not the message input count per competition is equal to or more than the given reference count P. It should be noted that the value of M is acquired from the "competition record".

When it is judged that (Ta+Tb) /M is less than P, the control unit 21 updates the "chat function use tendency flag" to 0 (S209). In this manner, in this embodiment, a user who has the message input count per competition less than the given reference count is judged to be a user who rarely uses the chat function.

On the other hand, when it is judged that (Ta+Tb) /M is equal to or more than P, the control unit 21 judges whether or not Tb/ (Ta+Tb) is equal to or more than a given reference value Q (S204). Here, Tb/(Ta+Tb) indicates the ratio of the total message input count during the match with respect to the total number of times the user has input a message thus far. In S204, it is judged whether or not this ratio is equal to or more than the given reference value Q.

When it is judged that Tb/ (Ta+Tb) is less than Q, the control unit 21 updates the "chat function use tendency flag" to 1 (S208). In this manner, in this embodiment, a user who has the ratio of the total message input count during the match with respect to the total number of times the user has input a message thus far less than the given reference value is judged to be a user who rarely uses the chat function during the match.

On the other hand, when it is judged that Tb/ (Ta+Tb) is equal to or more than Q, the control unit 21 judges whether or not Td/(Tc+Td+Te) is equal to or less than a given reference value R (S205). Here, Td/ (Tc+Td+Te) indicates the ratio of the total message input count during a period in which the user is behind the competition opponent with respect to the total message input count during the match. In other words, in S205, it is judged whether or not this ratio is equal to or less than the given reference value R.

When it is judged that Td/ (Tc+Td+Te) is equal to or less than R, the control unit 21 updates the "chat function use tendency flag" to 2 (S207). On the other hand, when it is judged that Td/ (Tc+Td+Te) is larger than R, the control unit 21 updates the "chat function use tendency flag" to 3 (S206). In this manner, in this embodiment, a user who has the ratio of the total message input count during a period in which the user is behind the competition opponent with respect to the total message input count during the match equal to or less than the given reference value is judged to be a user who rarely uses the chat function when they are behind the competition opponent. On the other hand, a user who has the above-mentioned ratio larger than the given reference value is judged to be a user who uses the chat function even when they are behind the competition opponent.

[User combination determining unit]

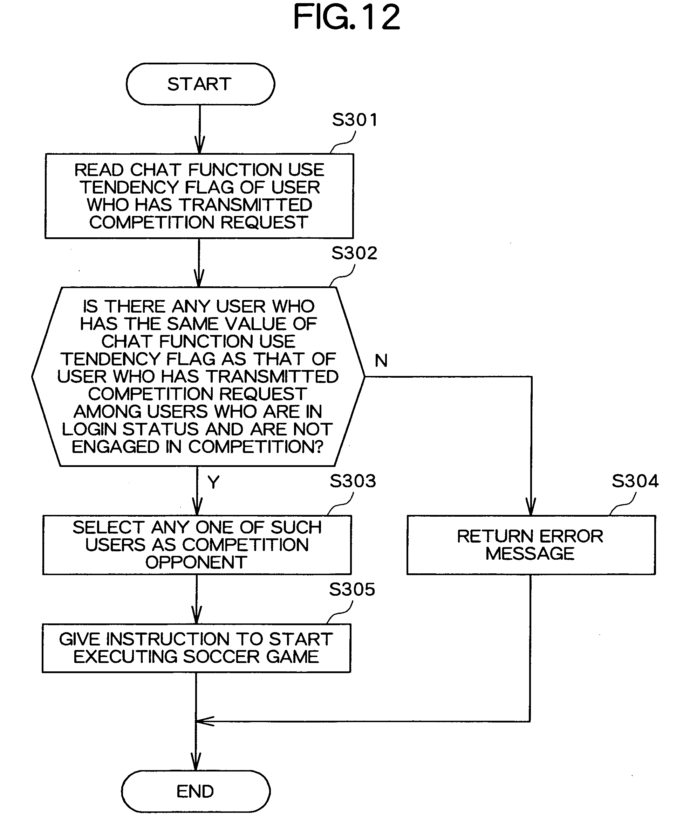

The user combination determining unit 64 is implemented mainly by the control unit 21 of the network game management device 20. The user combination determining unit 64 determines the combination of a plurality of users based on the use tendency information of each user stored in the chat function use tendency information storage unit 62. In the case of this embodiment, when the competition request is received from the user, the user combination determining unit 64 selects, as a competition opponent of the user, any one of users who are in the login status and are not engaged in a competition, based on the "chat function use tendency flag". Details thereof are described below (see FIG. 12).

[Network game start instructing unit]

The network game start instructing unit 66 is implemented mainly by the control unit 21 of the network game management device 20. The network game start instructing unit 66 gives an instruction to start executing a network game based on the combination of a plurality of users which is determined by the user combination determining unit 64. Details thereof are described below (see FIG. 12).

Here, a description is given of processing for implementing the user combination determining unit 64 and the network game start instructing unit 66. FIG. 12 is a flow chart illustrating the processing executed when the network game management device 20 has received the competition request from the user. The control unit 21 of the network game management device 20 executes the processing illustrated in FIG. 12 in accordance with the program stored in the hard disk 23 or the optical disk.

As illustrated in FIG. 12, the control unit 21 first reads the "chat function use tendency flag" of the user who has transmitted the competition request (S301). Next, the control unit 21 judges whether or not, among the users who are in the login status and are not engaged in a competition, there is any user who has the same value of the "chat function use tendency flag" as that of the user who has transmitted the competition request (S302). Here, whether or not a user is in the login status is judged by referring to the "login status flag". Further, whether or not a user is engaged in a competition is judged by referring to the "in-competition status flag".

When it is judged in S302 that there are such users as described above, the control unit 21 selects any one of such users as the competition opponent based on, for example, random numbers (S303). Then, the control unit 21 gives an instruction to start a soccer game to the game device 30 of the user who has transmitted the competition request and the game device 30 of the user who has been selected as the competition opponent (S305). Specifically, the control unit 21 acquires, from the user data, information on the user who has transmitted the competition request and information on the user who has been selected as the competition opponent. Next, the control unit 21 transmits, to the game devices 30 of the respective users, the information on respective competition opponents as well as the data giving an instruction to start a soccer game. After each of the game devices 30 has received the data giving an instruction to start a soccer game and the information on respective competition opponents, data exchange is started between those game devices 30. Then, the soccer game is started.

On the other hand, when it is judged in S302 that there is no such user as described above, the control unit 21 returns an error message to that effect to the game device 30 of the user who has transmitted the competition request (S304). In this case, the user who has transmitted the competition request is put into a wait state for a competition. It should be noted that when it is judged in S302 that there is no such user as described above, the control unit 21 may select any one of the users who are in the login status and are not engaged in a competition as a competition opponent based on, for example, a random number. Then, similarly to the case of selecting the competition opponent in S303, the control unit 21 may give an instruction to start executing the soccer game in S305.

In the network game system 10 described above, the "chat function use tendency flag" indicating the tendency of the user toward the use of the chat function is stored in association with each user (see FIG. 7). Then, the combination of users who are to compete against each other is determined based on the "chat function use tendency flag". As a result, as the competition opponent of a user, a user who has a similar tendency toward the use of the chat function to that of the user is selected.

For example, as the competition opponent of the user who rarely uses the chat function, a user who rarely uses the chat function is selected, and a user who uses the chat function frequently is not selected. In this case, both the users can enjoy playing the game without being bothered with chatting with respective competition opponents.

Further, in the network game system 10, the "chat function use tendency flag" of each user is set based on a comparison result between the number of times the user has used the chat function before the start of the match or after the end of the match and the number of times the user has used the chat function during the match. As a result, for example, as the competition opponent of a user who rarely uses the chat function during the match, a user who rarely uses the chat function during the match is selected, and a user who uses the chat function frequently during the match is not selected. In this case, both the users can concentrate on playing the game during the match, and can also enjoy chatting with respective competition opponents before the start of the match or after the end of the match.

Further, in the network game system 10, the "chat function use tendency flag" of each user is set based on a comparison result among the number of times the user has used the chat function when the user is holding a lead over the competition opponent, the number of times the user has used the chat function when the user is behind the competition opponent, and the number of times the user has used the chat function when the user is in a tie with the competition opponent. As a result, for example, as the competition opponent of a user who uses the chat function even when they are behind the competition opponent, a user who uses the chat function even when they are behind the competition opponent is selected, and a user who does not use the chat function when they are behind the competition opponent is not selected. In this case, regardless of the scoring status, both the users can enj oy chatting with respective competition opponents.

Further, in the network game system 10, the "chat function use tendency flag" of each user is automatically set based on the past tendency of the user toward the use of the chat function. Accordingly, the combination of users who are to compete against each other is determined based on the actual tendency of each user toward the use of the chat function.

It should be noted that the present invention is not limited to the embodiment described above.

For example, in S205 of FIG. 11, it is judged whether or not $Td/(Tc+Td+Te)$ is equal to or smaller than the given reference value R. Specifically, it is judged whether or not the ratio of the total message input count (Td) during a period in which the user is behind the competition opponent is small with respect to the total message input count during the match (Tc+Td+Te). In other words, it is judged whether or not the total message input count (Td) during a period in which the user is behind the competition opponent is smaller compared with the total message input count (Tc+Te) during a period in which the user is not behind the competition opponent. However, in S205 of FIG. 11, a comparison may be made between the total message input count (Tc) during a period in which the user is holding a lead over the competition opponent and the total message input count (Td) during a period in which the user is behind the competition opponent. Alternatively, in S205 of FIG. 11, a comparison may be made between the total message input count (Tc) during a period in which the user is holding a lead over the competition opponent and the total message input count (Td+Te) during a period in which the user is not holding a lead over the competition opponent. Alternatively, in S205 of FIG. 11, a comparison may be made between the total message input count (Tc) during a period in which the user is holding a lead over the competition opponent and the total message input count (Te) during a period in which the user is in a tie with the competition opponent. Alternatively, in S205 of FIG. 11, a comparison may be made between the total message input count (Td) during a period in which the user is behind the competition opponent and the total message input count (Te) during a period in which the user is in a tie with the competition opponent.

Further, for example, the game device 30 serving as the game server may count the number of times each user has input a message. For example, in a case where the first user competes against the second user, the game device 30 serving as the game server may count the number of times the first user has input a message and the number of times the second user has input a message. For example, when the game device 30 serving as the game server is the game device 30 of the first user, the game device 30 of the first user judges whether or not a message has been received from the game device 30 of the second user, whereby it is judged whether or not the second user has input a message. In this case, the game device 30 serving as the game server stores the message input count data (see FIG. 9) of the first user and the message input count data (see FIG. 9) of the second user.

Further, for example, instead of using the game device 30 of any one of the users as the game server, the network game management device 20 or another server computer may serve as the game server. In this case, the game situation data indicating the latest game situation is stored in the network game management device 20 or the other server computer. Then, the duplicate of the game situation data stored in the network game management device 20 or the other server computer is stored in the game device 30 of each user. Further, in this case, the content of an operation performed on each game device 30 is notified to the network game management device 20 or the other server computer via the communication network 12. Then, in the network game management device 20 or the other server computer, the game situation data is updated based on the content of the operation performed on each game device 30. After that, the game situation update data indicating an updated content of the game situation data is transmitted to each game device 30.

Further, a message which has been input by the user may be transmitted to the game device 30 of the competition opponent via the network game management device 20 or the other server computer. Then, the network game management device 20 or the other server computer may count the number of times each user has input a message, and then store the message input count data of each user. In the case where a message which has been input by the user is transmitted to the game device 30 of the competition opponent via the network game management device 20, the chat function use count counting unit 58 is implemented by the network game management device 20. In the case where a message which has been input by the user is transmitted to the game device 30 of the competition opponent via the other server computer, the chat function use count counting unit 58 is implemented by the other server computer.

Further, for example, instead of the chat function use count counting unit 58, a counting unit for counting the number of times the user has canceled the reproduction of the replay video may be provided. Then, the chat function use tendency information updating unit 60 may update the "chat function use tendency flag" of the user based on the number of times the user has canceled the reproduction of the replay video. In the network game system 10, an occasion on which the user can transmit a message to the competition opponent during the match is limited to while the replay video is being reproduced. Accordingly, in the network game system 10, it is possible to determine the tendency toward the use of the chat function during the match based on the number of times the user has canceled the reproduction of the replay video. For example, a user who has canceled the reproduction of the replay video frequently can be considered to have a tendency to rarely use the chat function during the match. It should be noted that, similarly to the chat function use count counting unit 58, the above-mentioned counting unit may be implemented by each game device 30, or may be implemented by the network game management device 20 or the other server computer.

Further, for example, the user data (see FIG. 7) may be structured to not include the "chat function use tendency flag". In this case, Steps S203 to S209 are omitted from the processing of FIG. 11. Further, in this case, in the processing of determining the competition opponent of the user who has transmitted the competition request (processing corresponding to S301 to S303 of FIG. 12), for example, a user who is similar to the user who has transmitted the competition request in terms of the ratio between the total message input counts Ta and Tb, or in terms of the ratio among the total message input counts Tc, Td and Te may be selected from among users who are in the login status and are not engaged in a competition. It should be noted that, in this case, the total message input counts Ta to Te correspond to the "use tendency information" indicating the tendency toward the use of the chat function.

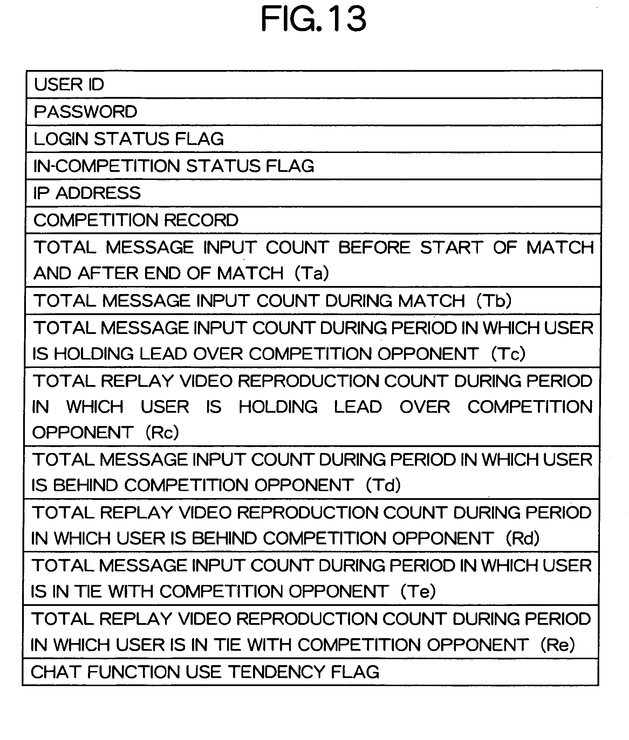

Further, for example, the chat function use count counting unit 58 (second counting means) may count the number of times the replay video has been reproduced for each period. Then, the total number of times the replay video has been reproduced may be stored for each period in the user data. FIG. 13 illustrates an example of a data structure of user data for this case. The user data illustrated in FIG. 13 contains a "total replay video reproduction count (Rc) during a period in which the user is holding a lead over the competition opponent", a "total replay video reproduction count (Rd) during a period in which the user is behind the competition opponent", and a "total replay video reproduction count (Re) during a period in which the user is in a tie with the competition opponent". Incidentally, in this embodiment, when the given game event has occurred, the reproduction of the replay video is started. Accordingly, the total replay video reproduction counts Rc to Re can be considered to indicate the total number of times the given game event has occurred. Further, in this embodiment, while the replay video is being reproduced during the match, the restriction on the use of the chat function is lifted. Accordingly, the total replay video reproduction counts Rc to Re can also be considered to indicate the total number of times the restriction on the use of the chat function has been lifted.

In the case where the data structure of the user data is the data structure illustrated in FIG. 13, in S205 to S207 of FIG. 11, the control unit 21 may update the "chat function use tendency flag" based on the total message input counts Tc to Te and the total replay video reproduction counts Rc to Re. For example, instead of the processing from S205 to S207 of FIG. 11, the control unit 21 may execute such processing as described below. Specifically, the control unit 21 calculates $\alpha1$ and $\alpha2$ in accordance with the following expressions (1) and (2). Here, $\alpha1$ indicates a message input count per reproduction of the replay video (hereinbelow, referred to as average message input count) during a period in which the user is not behind the competition opponent. $\alpha2$ indicates an average message input count during a period in which the user is behind the competition opponent.

$$\alpha1=(Tc+Te)/(Rc+Re) \quad \cdots \quad (1)$$

$$\alpha2=Td/Rd \quad \cdots \quad (2)$$

Next, the control unit 21 makes a comparison between $\alpha1$ and $\alpha2$, and then updates the "chat function use tendency flag" based on a result of the comparison. For example, the control unit 21 judges whether or not $\alpha1$-$\alpha2$ is equal to or larger than a given reference value (given value larger than 0). Here, a case in which $\alpha1$-$\alpha2$ is equal to or larger than the reference value represents a case in which the average message input count ($\alpha1$) in the case in which the user is not behind the competition opponent is larger than the average message input count ($\alpha2$) in the case in which the user is behind the competition opponent. In other words, the case in which $\alpha1$-$\alpha2$ is equal to or larger than the reference value represents a case in which the average message input count ($\alpha2$) in the case in which the user is behind the competition opponent is smaller than the average message input count ($\alpha1$) in the case in which the user is not behind the competition opponent. In this case, the control unit 21 updates the "chat function use tendency flag" to 2. On the other hand, in a case where $\alpha1$-$\alpha2$ is smaller than the reference value, the control unit 21 updates the "chat function use tendency flag" to 3.

Compared with an unskilled user, a skilled user is expected to have a shorter period of time in which their score is lower than the score of the competition opponent. Accordingly, the total message input count Td of the skilled user is expected to be smaller than that of the unskilled user. For this reason, even if the skilled user desires to use the chat function regardless of the scoring status, the skilled user is judged as a "user who rarely uses the chat function when they are behind the competition opponent". In this regard, with the above-mentioned configuration, it is possible to prevent such inconvenience from occurring.

Further, for example, the network game provided in the network game system 10 may be a game in which three or more users take part. Further, the network game provided in the network game system 10 may be a game other than a soccer game. Further, the network game provided in the network game system 10 is not necessarily a competition type game. For example, the game provided in the network game system 10 may be a game in which a plurality of users form a group (party) to play. In this case, the combination of users who belong to one group may be determined based on the "chat function use tendency flag".

**Claims**

1. A network game system for providing a network game, which is executed based on a combination of a plurality of users, and is provided with a chat function that enables chatting among the plurality of users, comprising:

   storage means for storing, in association with each user, use tendency information relating to a tendency toward use of the chat function;
   determining means for determining the combination of the plurality of users based on the use tendency information stored in the storage means in association with each user; and
   instructing means for giving an instruction to start executing the network game based on the combination of the plurality of users, which is determined by the determining means.

**2.** A network game system according to Claim 1, further comprising:

counting means for counting a number of times each user has used the chat function; and
updating means for updating, based on the number of times a user has used the chat function, the use tendency information stored in the storage means in association with the user.

**3.** A network game system according to Claim 2, wherein:

the counting means counts the number of times each user has used the chat function during each of a plurality of periods; and
the updating means updates, based on the number of times a user has used the chat function during each of the plurality of periods, the use tendency information stored in the storage means in association with the user.

**4.** A network game system according to Claim 3, wherein:

the counting means comprises means for counting, for each user, the number of times the chat function has been used during game play and the number of times the chat function has been used before start of the game play or/and after end of the game play; and
the updating means updates, based on a result of a comparison between the number of times a user has used the chat function during the game play and the number of times the user has used the chat function before the start of the game play or/and after the end of the game play, the use tendency information stored in the storage means in association with the user.

**5.** A network game system according to Claim 3, wherein:

the network game is a competition game;
the counting means comprises means for counting, for each user, the number of times the chat function has been used during a period in which a match situation of the user is a first situation, and the number of times the chat function has been used during a period in which the match situation of the user is a second situation; and
the updating means updates, based on a result of a comparison between the number of times a user has used the chat function during the period in which the match situation of the user is the first situation, and the number of times the user has used the chat function during the period in which the match situation of the user is the second situation, the use tendency information stored in the storage means in association with each user.

**6.** A network game system according to any one of Claims 3 to 5, further comprising:

restriction means for imposing restriction on the use of the chat function;
restriction lifting means for lifting the restriction imposed by the restriction means in the case where a given game event has occurred; and
second counting means for counting a number of times the restriction imposed by the restriction means has been lifted for each of the plurality of periods,

wherein the updating means updates, based on the number of times a user has used the chat function during each of the plurality of periods, and the number of times the restriction imposed by the restriction means has been lifted during each of the plurality of periods, the use tendency information stored in the storage means in association with the user.

**7.** A network game system according to Claim 1, further comprising:

reproduction means for reproducing a replay video;
reproduction canceling means for canceling the reproducing of the replay video in the case where a given operation is performed by the user;
restriction means for imposing restriction on the use of the chat function;
restriction lifting means for lifting the restriction imposed by the restriction means while the replay video is being reproduced;
counting means for counting a number of times the reproducing of the replay video has been canceled with the given operation performed by each user; and
updating means for updating, based on the number of times the reproducing of the replay video has been canceled with the given operation performed by a user, the use tendency information stored in the storage means in association with the user.

**8.** A method for controlling a network game system for providing a network game, which is executed based on a combination of a plurality of users, and is provided with a chat function that enables chatting among the plurality of users, the method comprising:

a step of reading a storage content of storage means for storing, in association with each user, use tendency information relating to a tendency toward use of the chat function;
a determining step of determining the combination of the plurality of users based on the use tendency information stored in the storage means in association with each user; and
an instructing step of giving an instruction to start executing the network game based on the combination of the plurality of users, which is determined by the determining step.

9. A program for causing a computer to function as a network game system for providing a network game, which is executed based on a combination of a plurality of users, and is provided with a chat function that enables chatting among the plurality of users, the program causing the computer to function as:

means for reading a storage content of storage means for storing, in association with each user, use tendency information relating to a tendency toward use of the chat function;
determining means for determining the combination of the plurality of users based on the use tendency information stored in the storage means in association with each user; and
instructing means for giving an instruction to start executing the network game based on the combination of the plurality of users, which is determined by the determining means.

10. A computer-readable information storage medium recorded with a program for causing a computer to function as a network game system for providing a network game, which is executed based on a combination of a plurality of users, and is provided with a chat function that enables chatting among the plurality of users, the program causing the computer to function as:

means for reading a storage content of storage means for storing, in association with each user, use tendency information relating to a tendency toward use of the chat function;
determining means for determining the combination of the plurality of users based on the use tendency information stored in the storage means in association with each user; and
instructing means for giving an instruction to start executing the network game based on the combination of the plurality of users, which is determined by the determining means.

# FIG.1

20

NETWORK GAME
MANAGEMENT
DEVICE

~ 12

| GAME DEVICE | · · · | GAME DEVICE | · · · | GAME DEVICE |

30                              30                              30

10 : NETWORK GAME SYSTEM

# FIG.2

22                          23                          24

| MAIN MEMORY | HARD DISK | OPTICAL DISK READING UNIT |

CONTROL UNIT ~ 21

COMMUNICATION INTERFACE ~ 25

20

# FIG.3

30

36

OPERATION
INPUT UNIT

32 — MAIN
MEMORY

33 — HARD DISK

34 — OPTICAL
DISK
READING
UNIT

CONTROL
UNIT

31

COMMUNICATION
INTERFACE

35

DISPLAY
UNIT — 37

SOUND
OUTPUT
UNIT — 38

# FIG.4

EP 2 184 090 A1

## FIG.5

GOOD LUCK

NICE SHOT!

NICE TRY

52 — YOU ARE PLAYING WELL

SORRY

THANK YOU

50

## FIG.6

CHAT FUNCTION USE COUNT COUNTING UNIT — 58

CHAT FUNCTION USE TENDENCY INFORMATION UPDATING UNIT — 60

CHAT FUNCTION USE TENDENCY INFORMATION STORAGE UNIT — 62

USER COMBINATION DETERMINING UNIT — 64

NETWORK GAME START INSTRUCTING UNIT — 66

10

# FIG.7

| |
|---|
| USER ID |
| PASSWORD |
| LOGIN STATUS FLAG |
| IN-COMPETITION STATUS FLAG |
| IP ADDRESS |
| COMPETITION RECORD |
| TOTAL MESSAGE INPUT COUNT BEFORE START OF MATCH AND AFTER END OF MATCH (Ta) |
| TOTAL MESSAGE INPUT COUNT DURING MATCH (Tb) |
| TOTAL MESSAGE INPUT COUNT DURING PERIOD IN WHICH USER IS HOLDING LEAD OVER COMPETITION OPPONENT (Tc) |
| TOTAL MESSAGE INPUT COUNT DURING PERIOD IN WHICH USER IS BEHIND COMPETITION OPPONENT (Td) |
| TOTAL MESSAGE INPUT COUNT DURING PERIOD IN WHICH USER IS IN TIE WITH COMPETITION OPPONENT (Te) |
| CHAT FUNCTION USE TENDENCY FLAG |

# FIG.8

| CHAT FUNCTION USE TENDENCY FLAG | USE OF CHAT FUNCTION | USE DURING MATCH | USE WHEN COMPETITION OPPONENT IS HOLDING LEAD |
|---|---|---|---|
| 0 | RARELY USE | — | — |
| 1 | USE | RARELY USE | — |
| 2 | USE | USE | RARELY USE |
| 3 | USE | USE | USE |

# FIG.9

| |
|---|
| USER ID |
| MESSAGE INPUT COUNT BEFORE START OF MATCH AND AFTER END OF MATCH (Na) |
| MESSAGE INPUT COUNT DURING MATCH (Nb) |
| MESSAGE INPUT COUNT DURING PERIOD IN WHICH USER IS HOLDING LEAD OVER COMPETITION OPPONENT (Nc) |
| MESSAGE INPUT COUNT DURING PERIOD IN WHICH USER IS BEHIND COMPETITION OPPONENT (Nd) |
| MESSAGE INPUT COUNT DURING PERIOD IN WHICH USER IS IN TIE WITH COMPETITION OPPONENT (Ne) |

# FIG.10

```
        ┌──────────────┐
        │    START     │
        └──────┬───────┘
               │         S101
        ┌──────▼───────┐
       ╱ HAS USER INPUT ╲  N
      ╱  MESSAGE TO      ╲────────────────────────────────────┐
      ╲  COMPETITION     ╱                                     │
       ╲ OPPONENT?      ╱                                      │
        └──────┬───────┘                                       │
             Y │        S102                                   │
        ┌──────▼───────┐   N                                   │
       ╱ DURING MATCH?  ╲──────────────┐                       │
        └──────┬───────┘               │                       │
             Y │        S103           │        S109           │
        ┌──────▼───────┐        ┌──────▼───────┐               │
        │  Nb ← Nb + 1 │        │  Na ← Na + 1 │               │
        └──────┬───────┘        └──────┬───────┘               │
               │        S104           │                       │
        ┌──────▼───────┐               │                       │
       ╱  IS SCORE OF   ╲              │                       │
      ╱   USER HIGHER    ╲  N          │                       │
      ╲  THAN SCORE OF   ╱────────┐    └───────────────────────▶
       ╲ COMPETITION    ╱         │                            │
        ╲ OPPONENT?    ╱          │                            │
         └─────┬──────┘           │                            │
             Y │      S105        │            S106            │
        ┌──────▼───────┐    ┌─────▼──────┐                     │
        │  Nc ← Nc + 1 │   ╱ IS SCORE OF  ╲                    │
        └──────┬───────┘  ╱  USER LOWER    ╲  N                │
               │          ╲ THAN SCORE OF  ╱───────────┐       │
               │           ╲ COMPETITION  ╱            │       │
               │            ╲ OPPONENT?  ╱             │       │
               │             └────┬─────┘              │       │
               │                Y │    S107            │  S108 │
               │            ┌─────▼──────┐      ┌───────▼─────┐ │
               │            │ Nd ← Nd + 1│      │ Ne ← Ne + 1 │ │
               │            └─────┬──────┘      └───────┬─────┘ │
               │                  │                     │       │
               ◀──────────────────┴─────────────────────┴───────┘
               │
        ┌──────▼───────┐
        │     END      │
        └──────────────┘
```

21

# FIG.11

```
                    START

                      │
                      ▼                        S201
        ┌──────────────────────────┐
        │  UPDATE IN-COMPETITION   │
        │     STATUS FLAG AND      │
        │   COMPETITION RECORD     │
        └──────────────────────────┘
                      │
                      ▼                        S202
        ┌──────────────────────────┐
        │  UPDATE Ta, Tb, Tc, Td,  │
        │     and Te BASED ON      │
        │  MESSAGE INPUT COUNT     │
        │          DATA            │
        └──────────────────────────┘
                      │
                      ▼                        S203
                                                    N
          ⟨  (Ta+Tb) / M ≧ P ?  ⟩──────────────────────────┐
                      │                                     │
                      │ Y              S204                 │
                      ▼                                     │
                                          N                 │
           ⟨  Tb / (Ta+Tb) ≧ Q ?  ⟩──────────────┐         │
                      │                           │         │
                      │ Y           S205          │         │
                      ▼                           │         │
                                        Y         │         │
          ⟨ Td / (Tc+Td+Te) ≦ R ? ⟩──────┐       │         │
                      │                   │        │         │
                      │ N      S206       │        │         │
                      ▼                   │        │         │
        ┌──────────────────────┐         │        │         │
        │    UPDATE CHAT       │         │        │         │
        │   FUNCTION USE       │         │        │         │
        │ TENDENCY FLAG TO 3   │         │        │         │
        └──────────────────────┘         │        │         │
                      │                   │        │         │
                      │          S207     │        │         │
                      │         ▼         │        │         │
                      │  ┌──────────────────────┐  │         │
                      │  │    UPDATE CHAT       │  │         │
                      │  │   FUNCTION USE       │  │         │
                      │  │ TENDENCY FLAG TO 2   │  │         │
                      │  └──────────────────────┘  │         │
                      │         │          S208    │         │
                      │         │         ▼        │         │
                      │         │  ┌──────────────────────┐  │
                      │         │  │    UPDATE CHAT       │  │
                      │         │  │   FUNCTION USE       │  │
                      │         │  │ TENDENCY FLAG TO 1   │  │
                      │         │  └──────────────────────┘  │
                      │         │         │          S209    │
                      │         │         │         ▼
                      │         │         │  ┌──────────────────────┐
                      │         │         │  │    UPDATE CHAT       │
                      │         │         │  │   FUNCTION USE       │
                      │         │         │  │ TENDENCY FLAG TO 0   │
                      │         │         │  └──────────────────────┘
                      │         │         │         │
                      ▼─────────┴─────────┴─────────┘
                      │
                      ▼
                    END
```

# FIG.12

START

S301

READ CHAT FUNCTION USE
TENDENCY FLAG OF USER
WHO HAS TRANSMITTED
COMPETITION REQUEST

S302

IS THERE ANY USER WHO
HAS THE SAME VALUE OF
CHAT FUNCTION USE
TENDENCY FLAG AS THAT OF
USER WHO HAS TRANSMITTED
COMPETITION REQUEST
AMONG USERS WHO ARE IN
LOGIN STATUS AND ARE NOT
ENGAGED IN COMPETITION?

N

Y

S303

SELECT ANY ONE OF SUCH
USERS AS COMPETITION
OPPONENT

S304

RETURN ERROR
MESSAGE

S305

GIVE INSTRUCTION TO START
EXECUTING SOCCER GAME

END

# FIG.13

| |
|---|
| USER ID |
| PASSWORD |
| LOGIN STATUS FLAG |
| IN-COMPETITION STATUS FLAG |
| IP ADDRESS |
| COMPETITION RECORD |
| TOTAL MESSAGE INPUT COUNT BEFORE START OF MATCH AND AFTER END OF MATCH (Ta) |
| TOTAL MESSAGE INPUT COUNT DURING MATCH (Tb) |
| TOTAL MESSAGE INPUT COUNT DURING PERIOD IN WHICH USER IS HOLDING LEAD OVER COMPETITION OPPONENT (Tc) |
| TOTAL REPLAY VIDEO REPRODUCTION COUNT DURING PERIOD IN WHICH USER IS HOLDING LEAD OVER COMPETITION OPPONENT (Rc) |
| TOTAL MESSAGE INPUT COUNT DURING PERIOD IN WHICH USER IS BEHIND COMPETITION OPPONENT (Td) |
| TOTAL REPLAY VIDEO REPRODUCTION COUNT DURING PERIOD IN WHICH USER IS BEHIND COMPETITION OPPONENT (Rd) |
| TOTAL MESSAGE INPUT COUNT DURING PERIOD IN WHICH USER IS IN TIE WITH COMPETITION OPPONENT (Te) |
| TOTAL REPLAY VIDEO REPRODUCTION COUNT DURING PERIOD IN WHICH USER IS IN TIE WITH COMPETITION OPPONENT (Re) |
| CHAT FUNCTION USE TENDENCY FLAG |

## INTERNATIONAL SEARCH REPORT

| | International application No. |
|---|---|
| | PCT/JP2008/060669 |

A. CLASSIFICATION OF SUBJECT MATTER
*A63F13/12(2006.01)i, A63F13/10(2006.01)i*

According to International Patent Classification (IPC) or to both national classification and IPC

B. FIELDS SEARCHED

Minimum documentation searched (classification system followed by classification symbols)
A63F13/12, A63F13/10

Documentation searched other than minimum documentation to the extent that such documents are included in the fields searched
Jitsuyo Shinan Koho          1922-1996     Jitsuyo Shinan Toroku Koho   1996-2008
Kokai Jitsuyo Shinan Koho   1971-2008     Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-281142 A   (Konami Co., Ltd.),<br>03 October, 2003 (03.10.03),<br>Par. Nos. [0001], [0018], [0050], [0055],<br>[0056], [0062], [0066], [0068], [0115]<br>(Family: none) | 1-10 |
| A | JP 2005-202909 A  (Kyoto University, Nomura<br>Research Institute, Ltd.),<br>28 July, 2005 (28.07.05),<br>Par. No. [0062]<br>(Family: none) | 2 |
| A | JP 2003-196420 A  (Sony Corp.),<br>11 July, 2003 (11.07.03),<br>Par. Nos. [0091], [0095]<br>(Family: none) | 3,4 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 July, 2008 (03.07.08) | Date of mailing of the international search report<br>15 July, 2008 (15.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003260272 A